# EUROPEAN PATENT SPECIFICATION

(11) **EP 4 057 144 B1**
(45) Date of publication and mention of the grant of the patent: **04.11.2026**
(21) Application number: 21305305.1
(22) Date of filing: 12.03.2021
(51) Int. Cl.: G06F 9/50

(54) **CONTROL INTERFACE FOR THE DEPLOYMENT OF AN APPLICATION, SYSTEM AND METHOD USING SUCH A CONTROL INTERFACE**
STEUERUNGSSCHNITTSTELLE FÜR DIE AUSLÖSUNG EINER ANWENDUNG, SYSTEM UND VERFAHREN MIT VERWENDUNG SOLCH EINER STEUERUNGSSCHNITTSTELLE
INTERFACE DE COMMANDE POUR LE DÉPLOIEMENT D'UNE APPLICATION, SYSTÈME ET PROCÉDÉ UTILISANT UNE TELLE INTERFACE DE COMMANDE

(43) Date of publication of application: 14.09.2022
(73) Proprietor: AGARIK SAS, 95870 Bezons (FR)
(72) Inventor: MERMET-GRANDFILLE, Alexis, 38240 Meylan (FR); JUAN FERRER, Ana, 08011 Barcelona (ES)
(74) Representative: Novagraaf Technologies

(56) References cited:
- EP-A1- 3 128 418
- US-A1- 2020 267 208
- US-A1- 2020 404 051
- RANJAN RAJIV ET AL: "Peer-to-peer service provisioning in cloud computing environments", THE JOURNAL OF SUPERCOMPUTING, vol. 65, no. 1, 21 October 2011 (2011-10-21), New York, pages 154 - 184, XP093335560, ISSN: 0920-8542, Retrieved from the Internet <URL:http://link.springer.com/article/10.1007/s11227-011-0710-5/fulltext.html> DOI: 10.1007/s11227-011-0710-5
- WILSON DANY: "Architecture for a Fully Decentralized Peer-to-Peer Collaborative Computing Platform", 1 January 2015 (2015-01-01), XP055895310, Retrieved from the Internet <URL:https://ruor.uottawa.ca/bitstream/10393/32790/1/wilson_dany_2015.pdf> [retrieved on 20220224], DOI: 10.20381/ruor-4170

## Description

### TECHNICAL FIELD

The technical field of the invention is the one of application deployment.

The present invention regards the deployment of serverless applications in the cloud and in particular the deployment of applications across a plurality of cloud providers.

### STATE OF THE ART

As of today, cloud application developers have access to the so called "serverless" services where a developer can give to a cloud provider an application source code and let the cloud control plane package, deploy and run this application. But each cloud providers have their own APIs and do not offer a unified application deployment and control experience.

With technologies like Kubernetes cluster federation, the ability to move an application container between clusters is possible but it remains limited to compute layer made of microservices and is still difficult as each cloud provider has their special customizations of their Kubernetes^{©}. For instance, security models are still very cloud provider specific for the offered facilities and the data is offered through persistent storage facilities which are varying by cloud providers. The cluster management, autoscaling, network and security also have some differences that do not offer a unified cross cloud provider experience.

With the growing number of different cloud locations, types (public, edge, on premise) and cloud services to use, developers are facing increased difficulties to specify and deploy their applications in one or a combination of cloud locations. Furthermore, each cloud provider has variations in the way they expose their services and the increased complexity for the development teams is a factor of human error leading to invalid deployments, unlawful workload locations or other human factor related mistakes. As a matter of fact, in the current schema, portability among cloud providers is still a manual and costly task whereas hybrid cloud execution in operation is still not operational.
Systems for orchestrating application deployment across multiple cloud environments from a central control entity are known in the art, for example from documents US 2020/404051 A1 and US 2020/0267208 A1.

There is a need for a solution to deploy, control and monitor seamlessly an application across different cloud providers.

### SUMMARY OF THE INVENTION

To allow such a deployment, the invention proposes a control interface running on a cloud provider that can interact with said cloud provider using a cloud driver. The control interface of the invention is further able to communicate with other similar control interfaces running on other cloud providers to from a mesh interface and allows an easy deployment across different cloud providers. The invention is set out in the appended set of claims.

### BRIEF DESCRIPTION OF THE FIGURES

Other characteristics and advantages of the invention will become clear from the description that is given thereof below, by way of indication and in no way limiting, with reference to the appended figures, among which:
Figure 1 is a schematic of a system according to the invention.

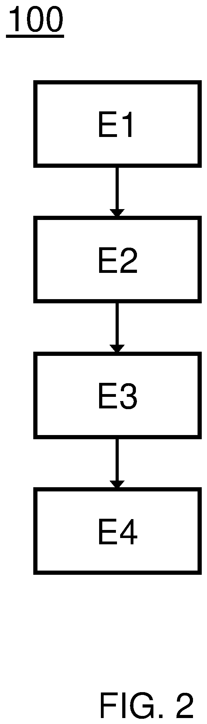

Figure 2 is a logogram of the method according to the invention.

### DETAILED DESCRIPTION

For greater clarity, identical or similar elements are marked by identical reference signs in all of the figures. For consciousness, when a reference appears as Xi in the figure where X is a letter and i is a number (for instance CI1, CI2, etc), then the reference X without the subscript designate all references with the letter X (for instance, C refers to C1, C2, etc.).

### A Control interface for the deployment of applications

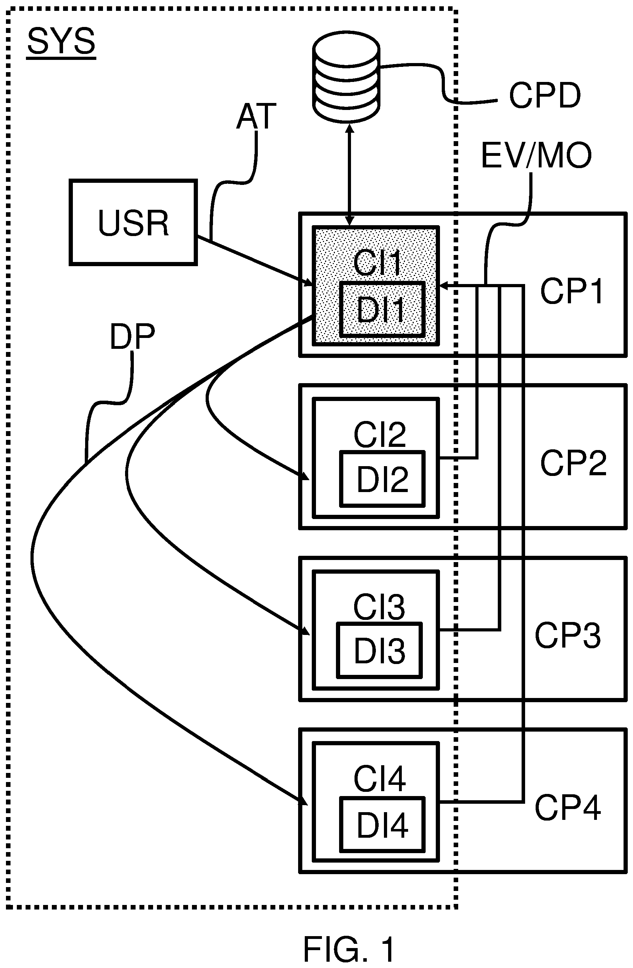

A first aspect of the invention illustrated in Fig. 1 (in the context of a broader system SYS) concerns a control interface CI for the deployment of an application, said control interface CI running on a specific cloud provider CP. The control interface CI according to the invention is connected to a plurality of other control interfaces CI running on a plurality of cloud providers CP. The control interface CI according to the invention is further connected to a cloud provider database CPD storing a description of each cloud provider CP of the plurality of cloud providers CPD.

It should be understood from the above paragraph that the control interface CI is implemented by means of a computer program running on real and/or virtual hardware. Therefore, the term "means for" should be interpreted as programmed to perform such operation using of one or more real and/or virtual hardware components such as a network card, a memory, and/or a processor, etc.

To interact with the cloud provider CP on which it is running, the control interface CI comprises a cloud driver DI specific to said cloud provider CP. The cloud driver DI allows the control interface CI to instruct the cloud provider CP to deploy one or more components of an application. This cloud driver DI is acting similarly to the driver of video card or any other driver device in the sense that it abstracts the specificity of the cloud provider CP. Furthermore, like any driver, it takes advantage of all the features provided by the cloud provider CP and not only the features common to all cloud providers CP. In other words, the features available through the cloud driver DI are not limited to a common denominator of the features provided by every cloud provider CP.

The control interface CI of the invention also comprises means to receive, from a user USR, an attribute file describing an application to deploy. The attribute can contain a link to the source code of the application to deploy. Alternatively, the source code can be provided by the user USR alongside the file containing the attributes of the application. In an embodiment, the attributes comprise at least one of the following information/restrictions.

The restriction can be related to legal consideration (e.g. GDRP) and/or geographical considerations (e.g. Europe, United States, etc.). Sometimes, those two considerations are interlinked. For instance, the respect of the GDPR imposes certain restriction about the location of the possible servers. The restrictions can also be related to intrinsic properties of the application to deploy, for instance type, horizontal or vertical scalability, affinity and anti-affinity rules, and migration rules. The restrictions can also be related to network performances, for instance maximum latency to access a particular data source and among application components. The restriction can also be related to security, for instance a requirement for security certifications at the cloud provider CP, risk level in terms of probability of the cloud provider CP breaching the service level agreement (often referred as SLA) the user is able to assume for the application. The restriction can also be related to energy consumption, for instance boundaries in terms of power consumptions or greenhouse gas/carbon emissions. The restriction can also be related to economical consideration, for instance boundaries in terms of overall cost limits or cost per operation per hour.

The control interface CI of the invention further comprises means to select, for each components of the application, based on the descriptions provided by the cloud provider database CPD and the attribute file, a cloud provider CP suitable for the deployment of said component. In other words, the control interface CI uses the description of the different cloud providers CP provided by the cloud provider database CPB to identify one or more cloud providers CP where a given component of the application can be deployed while respecting the constraints contained in the attribute file.

The control interface CI of the invention further comprises for each selected cloud providers CP, means to send to the corresponding control interface CI the component to deploy. The deployment takes place on a plurality of cloud providers CP, each one of them being chosen to fulfill the requirements described in the attribute file.

The control interface CI of the invention further comprises when receiving a component to deploy from another control interface CI of the plurality of control interface CI, means to deploy said component using the cloud driver DI. More precisely, the control interface CI uses its cloud driver DI to instruct the cloud provider CP to deploy the component, for instance using the APIs provided by said cloud provider CP. The deployment of the component also includes opening the network routes and security measure between the different component needed by the application. Therefore, the different components of an application can be deployed in different cloud providers CP without the need for the user USR to consider the specificity of each cloud provider CP. This is made possible by the presence, for each cloud provider CP, of a control interface CI according to the invention that can abstract the specificity of the cloud provider CP thanks to the cloud driver DI.

In an embodiment, the control interface CI comprises means to receive, from the deployed components, events EV related to the state of said component. In other words, the control interface CI will receive all the events emitted by all the components it has deployed in the cloud provider CP on which it is running.

Furthermore, the control interface CI according to the invention can forward those events to other control interfaces CI. To do so, the control interface CI further comprises means to transmit the received events EV to one or more control interfaces CI of the plurality of control interfaces CI.

Of course, similarly, the control interface CI can receive events from other control interfaces CI of the plurality of control interfaces CI. Therefore, the control interface CI further comprises means to receive events from other control interfaces CI of the plurality of control interfaces CI.

Eventually, the control interface CI needs to forward the collected events EV to the user USR. To do so, the control interface CI further comprises means to transmit to the user USR events EV relating to the components of the deployed application. These events may have been received directly by the control interface CI or received by means of other control interface CI from the plurality of control interfaces CI.

It can also be useful to monitor the deployed component to check if they respect the attributes based on which they were deployed. To perform such a monitoring MO, in an embodiment, the control interface CI comprises means to check the status of the component running on its cloud provider CP.

The status of the component can concern one of the following elements. It can concern the application intrinsic properties (metadata) like type, horizontal or vertical scalability affinity and anti-affinity rules, and migration rules. It can also concern maximum latency to access a particular data source and among application components. It can also concern restrictions to a particular set of geographies versus the cloud provider's region. It can also concern required security certifications for the cloud providers CP. It can also concern risk level in terms of probability of the cloud provider CP breaching the SLA the user is able to assume for the application. It can also concern boundaries in terms of power consumptions or green-house gas/carbon emissions. It can also concern boundaries in terms of overall cost limits or cost per operation hour. In other words, the status provides one or more elements needed to evaluate if the attributes used for the deployment are respected.

The control interface CI further comprises means to compare the status of a component to the attributes of said component. For instance, if the attribute imposes a minimum bandwidth, the bandwidth of a component can fail below this minimum bandwidth. In this case it is important to detect this evolution and to report it.

To do so, the control interface CI further comprises, when the attributes are not respected, means to transmits an alert to the user USR and/or to one or more control interfaces CI of the plurality of control interfaces CI. Of course, since it will transmit such alert to other control interfaces CI, it will also receive alerts from other control interfaces CI of the plurality of control interfaces CI. Therefore, the control interface CI according to the invention also comprises means to receive alerts from other control interfaces CI of the plurality of control interfaces CI. In an embodiment, the control interface CI comprises, when an alert is emitted for a given component, to redeploy the application associated with said component. It means that the attributes will be revaluated, the cloud providers CP selected (considering the alert - for instance, the alert could modify, preferably temporarily, the description in the cloud provider database CPD for the cloud provider(s) CP concerned by the alert(s)) and the component will be deployed again.

### A computer system for the deployment of applications

It is possible, using a plurality of control interface CI according to the invention, to build a system SYS for the deployment of applications. Therefore, a second aspect of the invention illustrated in Fig. 1 concerns a computer system SYS for the deployment of applications. More particularly, the system SYS can be used to deploy one or more applications based on attributes provided by a user USR.

The computer system SYS of the invention comprises a plurality of control interfaces CI according to the first aspect of the invention. Therefore, in the system SYS according to the invention, each control interface CI is running on a cloud provider CP. For instance, a first control interface CI1 is running on a first cloud provider CP1, a second control interface CI2 is running on a second cloud provider CP2, a third control interface CI3 is running on a third cloud provider CP3 and a fourth control interface CI4 is running on a fourth cloud provider CP4. Furthermore, each control interface CI comprises a communication means such as a network card, a virtual network or any other means that allows communication between the control interfaces CI of the system SYS. The network formed by the control interfaces is called a mesh interface. In this mesh interface, control interface CI communicate directly or indirectly through one or more intermediate control interfaces CI. Each control interface CI also comprises a cloud driver DI specific to the cloud provider CP on which the control interface CI is running. In the previous example, the first control interface CI1 comprises a cloud driver DI1 specific to the first cloud provider CP1, the second control interface CI2 comprises a cloud driver DI2 specific to the second cloud provider CP, the third control interface CI3 comprises a cloud driver DI3 specific to the third cloud provider CP3 and the fourth control interface CI4 comprises a cloud driver DI4 specific to the fourth cloud provider CP4.

The system SYS according to the invention also comprises a cloud provider database CPD containing a description of a plurality of cloud providers CP on which the control interfaces CI of the plurality of control interfaces CI are running. As already described, the cloud provider database CPD makes it possible to select one or more cloud providers according to their description. In the example of Fig. 1, the cloud provider database CPD contain a description of the first, second, third and fourth cloud providers CP1, CP2, CP3, CP4.

Furthermore, the system SYS is configured to, using one control interface CI of the plurality of control interfaces CI, said initial control interface CI, read a file provided by a user USR and containing the attributes of an application to deploy. The only difference between the initial control interface CI1 (in grey on Fig. 1) and the other control interfaces CI2,CI3,CI4 of the system SYS is that the initial control interface CI1 is the one that received the attribute file from the user USR. The initial control interface CI1 to which the attributes are transmitted is chosen by the user USR. In an embodiment not part of the invention, the initial control interface CI1 is chosen by the system SYS based on the location of the user USR. Other criteria can also be considered such as network latency or regulation rules. As it will be apparent form the description of the system SYS, the initial control interface CI1 will act as a main control interface CI1 and send instructions to the other control interfaces CI2,CI3,CI4 of the system SYS. Furthermore, when they need to report some information to the user USR, the other control interfaces CI2,CI3,CI4 must go through the initial control interface CI1 and do not communicate directly with the user USR. This architecture facilitates the events EV management and the monitoring MO of the deployed components.

For each component of the application, the system SYS is also configured to determine, using the initial control interface CI1 and based on the descriptions provided by the cloud provider database CPD and the attributes of the application, the possible deployment solutions offered by the plurality of cloud providers CP. In other words, as already described, the initial control interface CI1 uses the description of the different cloud providers CP provided by the cloud provider database CPB to identify one or more cloud providers CP where a given component of the application can be deployed to respect the constraints contained in the attribute file.

For each selected cloud provider CP and using the initial control interface CI1, the system SYS is also configured to send the component to deploy to the corresponding control interfaces CI. For instance, if the application comprises four components, the initial control interface CI1 can send a first component to deploy to itself, a second component to the second control interface CI1, a third component to the third control interface CI3, a fourth component to the fourth control interface CI4. Of course, this is an example, and several components can be sent to the same control interface CI while other control interfaces CI receive none.

For each control interface CI receiving a component to deploy, using the cloud driver DI of said control interface CI, the system SYS is further configured to deploy said component on the corresponding cloud provider CP. For instance, the components received by the initial control interface CI1 (sent by itself) will be deployed on the first cloud provider CP1 using the driver DI1 of the initial control interface CI1. Similarly, the components sent to the second (third or fourth) control interface CI will be deployed on the second (third or fourth) cloud provider CP using the driver DI of the second (third or fourth) control interface CI.

In an embodiment, to report events related to each component to the user, each control interface CI of the system is configured to: receive from, the components they have deployed, events EV related to the state of said components and to transmit the received events EV to the initial control interface CI1. In other words, the first (second, third or fourth) control interface CI will receive events EV from the components running on the first (second, third or fourth) cloud provider CP.

Furthermore, the initial control interface CI1 is configured to receive said events EV. In other words, in the example of Fig. 1, the second, third and fourth cloud interfaces CI2,CI3,CI4 will forward to the initial control interface CI1 the events they received from the component running on their respective cloud providers CP2,CP3,CP4. Then, the initial cloud provider will transmits said events EV to the use USR. In other words, the initial control interface CI1 transmits the events EV it received directly (from components running on the first cloud provider CP1) as well as the ones that were emitted by components running on other cloud providers CP2,CP3,CP4 and forwarded by the other control interfaces CI2,CI3,CI4. This centralization of events EV reporting facilitates the handling of said events EV by giving an overview of all components of the deployed application.

In an embodiment, to monitor MO the deployed components, each control interface CI of the system SYS is configured to check the status of the components running on its cloud provider CP; compare the status of the components to the attributes of said components; and when the attributes are not respected, transmits an alert to the initial control interface. Such alerts are gathered in a similar fashion than the events EV. In other words, the initial control interface CI1 is configured to receive said alerts and transmit said alerts to the user USR. Once again, the centralization of such alerts facilitates their handling and allows to monitor all the components of the application in one point (i.e., the initial control interface CI1).

In an embodiment, the initial control interface CI1 is configured to, when receiving an alert concerning one or more components, redeploy the application associated with said component. As already described, it means that the attributes will be revaluated, the cloud providers selected (considering the alert - for instance, the alert could, preferably temporarily, modify the description in the cloud provider database CPD for the cloud provider(s) CP concerned by the alert(s)) and the component will be deployed again. The monitoring of the invention ensures that the attributes are always respect for each component of the application, and that the application can be redeployed to ensure such a condition.

### An attribute-based method 100 for the deployment of applications

A third aspect of the invention concerns an attribute-based method 100 for the deployment of applications using a computer system SYS according to the second aspect of the invention.

The method 100 comprises, using one control interface CI of the plurality of control interfaces CI, said initial control interface CI, the step E1 of reading a file provided by a user USR and containing the attributes of an application to deploy.

The method 100 further comprises, for each component of the application, using the initial control interface CI, the step E2 of determining, based on the descriptions provided by the cloud provider database CPD and the attributes of the application, the possible deployment solutions offered by the plurality of cloud providers CP.

The method further comprises, for each selected cloud provider CP, using the initial control interface CI, the step E3 of sending the component to deploy to the corresponding control interfaces CI.

The method also comprises, for each control interface CI receiving a component to deploy, using the cloud driver DI of said control interface CI, the step E4 of deploying said component on the corresponding cloud provider CP.

In an embodiment, the method further comprises:
- for each control interface CI of the system, the step of receiving from, the components deployed by said control interface, events EV related to the state of said components;
- for each control interface CI of the system, the step of transmitting the received events EV to the initial control interface CI1;
- the step of receiving, by the initial control interface CI1 said events EV; and
- the step of transmitting, by the initial control interface CI1, said events EV to the user USR.

In an embodiment, the method further comprises:
- for each control interface CI of the system SYS, the step of checking the status of the components running on its cloud provider CP;
- for each control interface CI of the system SYS, the step of comparing the status of the components to the attributes of said components;
- for each control interface CI of the system SYS, when the attributes are not respected, the step of transmitting an alert to the initial control interface;
- a step of receiving, by the initial control interface CI1, said alerts;
- a step of transmitting, by the initial control interface CI1 said alerts to the user USR.

In an embodiment, the method further comprises, when receiving an alert concerning one or more components, the step of redeploying, by the initial control interface CI1, the application. As details before, redeploying the application means that the steps of the method 100 described above will be reiterated to redeploy the application, this new iteration taking into account the fact that there was an alert (for instance, the alert could modify, preferably temporarily, the description of cloud provider database CPD for the cloud provider(s) CP concerned by the alert(s)).

## Claims

1. Control interface (CI1) for the deployment of an application, said control interface (CI1) running on a specific cloud provider (CP), said control interface (CI1), called initial control interface, being connected directly or indirectly through one or more intermediate control interfaces to a plurality of other control interfaces (CI) running on a plurality of cloud providers (CP), said initial control interface (CI1) forming with said plurality of other control interfaces (CI) a network, called a mesh interface, said initial control interface (CI) being further connected to a cloud provider database (CPD) storing a description of each cloud provider (CP) of the plurality of cloud providers (CPD), said initial control interface (CI1) being chosen by a user, the initial control interface (CI1) comprising:
- A cloud driver (DI) specific to the cloud provider (CP) on which the control interface (CI1) is running, said cloud driver (DI) allowing the control interface (CI) to instruct the cloud provider (CP) to deploy one or more components of an application;
- means to receive and read, from said user (USR), an attribute file describing an application to deploy;
- means to select, for each component of the application, based on the descriptions provided by the cloud provider database (CPD) and the attribute file, a cloud provider (CP) suitable for the deployment of said component;
- for each selected cloud provider (CP), means to send to the corresponding control interface (CI) the component to deploy, said corresponding control interface, comprising a cloud driver (DI) specific to the cloud provider (CP) on which the corresponding control interface is running, said corresponding control interface being configured to, when receiving the component to deploy from the initial control interface (CI1) of the plurality of control interface (CI), deploy said component using the cloud driver (DI).

2. Control interface (CI1) according to claim 1 wherein the control interface (CI1) further comprises:
- means to receive from the deployed component events (EV) related to the state of said component;
- means to transmit the received events (EV) to one or more control interfaces (CI) of the plurality of control interfaces (CI);
- means to receive events from other control interfaces (CI) of the plurality of control interfaces (CI);
- means to transmit the received events (EV) to the user (USR).

3. Control interface (CI1) according to claim 1 or claim 2 wherein the control interface (CI) further comprises:
- means to check the status of the components running on its cloud provider (CP);
- means to compare the status of a component to the attributes of said components;
- when the attributes are not respected, means to transmit an alert to the user (USR) and/or one or more control interfaces (CI) of the plurality of control interfaces (CI);
- means to receive alerts from other control interfaces (CI) of the plurality of control interfaces (CI).

4. Control interface according to claim 3 wherein the control interface comprises, when an alert is emitted for a given component, means to redeploy the application.

5. Computer system (SYS) comprising a plurality of control interfaces (CI), comprising an initial control interface (CI1) according to one of the claims 1 to 4 and a cloud provider database (CPD) containing descriptions of a plurality of cloud providers (CP) on which the control interfaces (CI) of the plurality of control interfaces (CI) are running, the initial control interface and the other control interfaces (CI) of the plurality of control interfaces being connected to the cloud provider database (CPD) and between themselves directly or indirectly through one or more intermediate control interfaces to form a network, called a mesh interface, the system being configured to:
- Using said initial control interface (CI1) of the plurality of control interfaces (CI), read a file provided by a user (USR) and containing the attributes of an application to deploy;
- for each component of the application, using the initial control interface (CI1), determine, based on the descriptions provided by the cloud provider database (CPD) and the attributes of the application, the possible deployment solutions offered by the plurality of cloud providers (CP);
- for each selected cloud provider (CP), using the initial control interface (CI1), send the component to deploy to the corresponding control interfaces (CI), each of said corresponding control interfaces (CI) being configured to receive the component to deploy, using the cloud driver (DI) of said control interface (CI) and deploy said component on the corresponding cloud provider (CP).

6. System (SYS) according to claim 5 wherein, each control interface (CI) of the system is configured to:
- receive from, the components they have deployed, events (EV) related to the state of said components; and
- to transmit the received events (EV) to the initial control interface (CI1);
and the initial control interface (CI1) is configured to:
- receive said events (EV); and
- transmit said events (EV) to the user (USR).

7. System (SYS) according to claim 5 or claim 6 wherein, each control interface (CI) of the system (SYS) is configured to:
- check the status of the components running on its cloud provider (CP);
- compare the status of components to the attributes of said components; and
- when the attributes are not respected, transmits an alert to the initial control interface (CI1);
and the initial control interface (CI1) is configured to:
- receive said alerts;
- transmit said alerts to the user (USR).

8. System according to claim 7 wherein the initial control interface is configured to, when receiving an alert concerning one or more components, redeploy the application.

9. Attribute based deployment method (100) using a computer system (SYS) according to claim 5, the method comprising:
- Using one control interface (CI1) of the plurality of control interfaces (CI), called initial control interface (CI1), the step (E1) of reading a file provided by a user (USR) and containing the attributes of an application to deploy;
- for each component of the application, using the initial control interface (CI1), the step (E2) of determining, based on the descriptions provided by the cloud provider database (CPD) and the attributes of the application, the possible deployment solutions offered by the plurality of cloud providers (CP);
- for each selected cloud provider (CP), using the initial control interface (CI1), the step (E3) of sending the components to deploy to the corresponding control interfaces (CI);
- for each control interface (CI) receiving a component to deploy, using the cloud driver (DI) of said control interface (CI), the step (E4) of deploying said component on the corresponding cloud provider (CP).

10. Method according to claim 9 further comprising:
- for each control interface (CI) of the system, the step of receiving from, the components deployed by said control interface, events (EV) related to the state of said components;
- for each control interface (CI) of the system, the step of transmitting the received events (EV) to the initial control interface (CI1);
- the step of receiving, by the initial control interface (CI1) said events (EV); and
- the step of transmitting, by the initial control interface (CI1), said events (EV) to the user (USR).

11. Method according to claim 9 or claim 10 comprising:
- for each control interface (CI) of the system (SYS), the step of checking the status of the components running on its cloud provider (CP);
- for each control interface (CI) of the system (SYS), the step of comparing the status of a components to the attributes of said components;
- for each control interface (CI) of the system (SYS), when the attributes are not respected, the step of transmitting an alert to the initial control interface (CI1);
- a step of receiving, by the initial control interface (CI1), said alerts;
- a step of transmitting, by the initial control interface (CI1) said alerts to the user (USR).

12. Method according to claim 11 comprising the step of, when receiving an alert concerning one or more components, redeploying, by the initial control interface (CI1), the application.

13. A computer program comprising instructions which, when the program is executed by a computer, cause the computer to carry out the method of claim 9 to 12.

14. A computer-readable data carrier having stored thereon the computer program of claim 13.

## Patentansprüche

1. Steuerschnittstelle (CI1) für das Auslösen einer Anwendung, wobei die Steuerschnittstelle (CI1) auf einem spezifischen Cloud-Anbieter (CP) ausgeführt wird, wobei die Steuerschnittstelle (CI1), die als anfängliche Steuerschnittstelle bezeichnet wird, direkt oder indirekt über eine oder mehrere Zwischensteuerschnittstellen mit einer Vielzahl von anderen Steuerschnittstellen (CI) verbunden ist, die auf einer Vielzahl von Cloud-Anbietern (CP) ausgeführt werden, wobei die anfängliche Steuerschnittstelle (CI1) mit der Vielzahl von anderen Steuerschnittstellen (CI) ein Netzwerk bildet, das als Mesh-Schnittstelle bezeichnet wird, wobei die anfängliche Steuerschnittstelle (CI) ferner mit einer Cloud-Anbieter-Datenbank (CPD) verbunden ist, die eine Beschreibung jedes Cloud-Anbieters (CP) aus der Vielzahl von Cloud-Anbietern (CPD) speichert, wobei die anfängliche Steuerschnittstelle (CI1) von einem Benutzer ausgewählt wird, wobei die anfängliche Steuerschnittstelle (CI1) umfasst:
- einen für den Cloud-Anbieter (CP), auf dem die Steuerschnittstelle (CI1) ausgeführt wird, spezifischen Cloud-Treiber (DI), wobei der Cloud-Treiber (DI) es der Steuerschnittstelle (CI) ermöglicht, den Cloud-Anbieter (CP) anzuweisen, eine oder mehrere Komponenten einer Anwendung auszulösen;
- Mittel zum Empfangen und Lesen, von dem Benutzer (USR), einer Attributdatei, die eine auszulösende Anwendung beschreibt;
- Mittel zum Auswählen eines für das Auslösen der Komponente geeigneten Cloud-Anbieters (CP) für jede Komponente der Anwendung basierend auf den durch die Cloud-Anbieter-Datenbank (CPD) und die Attributdatei bereitgestellten Beschreibungen;
- für jeden ausgewählten Cloud-Anbieter (CP), Mittel zum Senden der auszulösenden Komponente an die entsprechende Steuerschnittstelle (CI), wobei die entsprechende Steuerschnittstelle einen Cloud-Treiber (DI) umfasst, der spezifisch für den Cloud-Anbieter (CP) ist, auf dem die entsprechende Steuerschnittstelle ausgeführt wird, wobei die entsprechende Steuerschnittstelle konfiguriert ist, um beim Empfangen der auszulösenden Komponente von der anfänglichen Steuerschnittstelle (CI1) aus der Vielzahl von Steuerschnittstellen (CI) die Komponente unter Verwendung des Cloud-Treibers (DI) auszulösen.

2. Steuerschnittstelle (CI1) nach Anspruch 1, wobei die Steuerschnittstelle (CI1) ferner umfasst:
- Mittel zum Empfangen von Ereignissen (EV) von der ausgelösten Komponente in Bezug auf den Zustand der Komponente;
- Mittel zum Übertragen der empfangenen Ereignisse (EV) an eine oder mehrere Steuerschnittstellen (CI) aus der Vielzahl von Steuerschnittstellen (CI);
- Mittel zum Empfangen von Ereignissen von anderen Steuerschnittstellen (CI) aus der Vielzahl von Steuerschnittstellen (CI);
- Mittel zum Übertragen der empfangenen Ereignisse (EV) an den Benutzer (USR).

3. Steuerschnittstelle (CI1) nach Anspruch 1 oder Anspruch 2, wobei die Steuerschnittstelle (CI) ferner umfasst:
- Mittel zum Überrüfen des Zustands der Komponenten, die auf ihrem Cloud-Anbieter (CP) ausgeführt werden;
- Mittel zum Vergleichen des Zustands einer Komponente mit den Attributen der Komponenten;
- wenn die Attribute nicht eingehalten werden, Mittel zum Übertragen einer Warnung an den Benutzer (USR) und/oder eine oder mehrere Steuerschnittstellen (CI) aus der Vielzahl von Steuerschnittstellen (CI);
- Mittel zum Empfangen von Warnungen von anderen Steuerschnittstellen (CI) aus der Vielzahl von Steuerschnittstellen (CI).

4. Steuerschnittstelle nach Anspruch 3, wobei die Steuerschnittstelle, wenn einer Warnung für eine gegebene Komponente ausgegeben wird, Mittel zum erneuten Auslösen der Anwendung umfasst.

5. Computersystem (SYS), umfassend eine Vielzahl von Steuerschnittstellen (CI), umfassend eine anfängliche Steuerschnittstelle (CI1) nach einem der Ansprüche 1 bis 4 und eine Cloud-Anbieter-Datenbank (CPD), die Beschreibungen einer Vielzahl von Cloud-Anbietern (CP) enthält, auf denen die Steuerschnittstellen (CI) aus der Vielzahl von Steuerschnittstellen (CI) ausgeführt werden, wobei die anfängliche Steuerschnittstelle und die anderen Steuerschnittstellen (CI) aus der Vielzahl von Steuerschnittstellen mit der Cloud-Anbieter-Datenbank (CPD) und untereinander direkt oder indirekt über eine oder mehrere Zwischensteuerschnittstellen verbunden sind, um ein Netzwerk zu bilden, das als Mesh-Schnittstelle bezeichnet wird, wobei das System konfiguriert ist zum:
- unter Verwendung der anfänglichen Steuerschnittstelle (CI1) aus der Vielzahl von Steuerschnittstellen (CI), Lesen einer Datei, die von einem Benutzer (USR) bereitgestellt wird und die Attribute einer auszulösenden Anwendung enthält;
- für jede Komponente der Anwendung, unter Verwendung der anfänglichen Steuerschnittstelle (CI1), basierend auf den von der Cloud-Anbieter-Datenbank (CPD) bereitgestellten Beschreibungen und den Attributen der Anwendung, Bestimmen der möglichen Auslösungslösungen, die von der Vielzahl von Cloud-Anbietern (CP) angeboten werden;
- für jeden ausgewählten Cloud-Anbieter (CP), unter Verwendung der anfänglichen Steuerschnittstelle (CI1), Senden der auszulösenden Komponente an die entsprechenden Steuerschnittstellen (CI), wobei jede der entsprechenden Steuerschnittstellen (CI) konfiguriert ist, um die auszulösende Komponente unter Verwendung des Cloud-Treibers (DI) der Steuerschnittstelle (CI) zu empfangen und die Komponente auf dem entsprechenden Cloud-Anbieter (CP) auszulösen.

6. System (SYS) nach Anspruch 5, wobei jede Steuerschnittstelle (CI) des Systems konfiguriert ist zum:
- Empfangen, von den von ihnen ausgelösten Komponenten, von Ereignissen (EV) in Bezug auf den Zustand der Komponenten; und
- Übertragen der empfangenen Ereignisse (EV) an die anfängliche Steuerschnittstelle (CI1);
und die anfängliche Steuerschnittstelle (CI1) konfiguriert ist zum:
- Empfangen der Ereignisse (EV); und
- Übertragen der Ereignisse (EV) an den Benutzer (USR).

7. System (SYS) nach Anspruch 5 oder Anspruch 6, wobei jede Steuerschnittstelle (CI) des Systems (SYS) konfiguriert ist zum:
- Überprüfen des Zustands der auf ihrem Cloud-Anbieter (CP) ausgeführten Komponenten;
- Vergleichen des Zustands von Komponenten mit den Attributen der Komponenten; und
- wenn die Attribute nicht eingehalten werden, Übertragen einer Warnung an die anfängliche Steuerschnittstelle (CI1);
und die anfängliche Steuerschnittstelle (CI1) konfiguriert ist zum:
- Empfangen der Warnungen;
- Übertragen der Warnungen an den Benutzer (USR).

8. System nach Anspruch 7, wobei die anfängliche Steuerschnittstelle konfiguriert ist, um bei Empfang einer Warnung bezüglich einer oder mehrerer Komponenten die Anwendung erneut auszulösen.

9. Attributbasiertes Auslöseverfahren (100) unter Verwendung eines Computersystems (SYS) nach Anspruch 5, wobei das Verfahren umfasst:
- unter Verwendung einer Steuerschnittstelle (CI1) aus der Vielzahl von Steuerschnittstellen (CI), die als anfängliche Steuerschnittstelle (CI1) bezeichnet wird, den Schritt (E1) des Lesens einer Datei, die von einem Benutzer (USR) bereitgestellt wird und die Attribute einer auszulösenden Anwendung enthält;
- für jede Komponente der Anwendung, unter Verwendung der anfänglichen Steuerschnittstelle (CI1), den Schritt (E2) des Bestimmens, basierend auf den durch die Cloud-Anbieter-Datenbank (CPD) bereitgestellten Beschreibungen und den Attributen der Anwendung, der möglichen Auslösungslösungen, die von der Vielzahl von Cloud-Anbietern (CP) angeboten werden;
- für jeden ausgewählten Cloud-Anbieter (CP), unter Verwendung der anfänglichen Steuerschnittstelle (CI1), den Schritt (E3) des Sendens der auszulösenden Komponenten an die entsprechenden Steuerschnittstellen (CI);
- für jede Steuerschnittstelle (CI), die eine auszulösende Komponente empfängt, unter Verwendung des Cloud-Treibers (DI) der Steuerschnittstelle (CI), den Schritt (E4) des Auslösens der Komponente auf dem entsprechenden Cloud-Anbieter (CP).

10. Verfahren nach Anspruch 9, ferner umfassend:
- für jede Steuerschnittstelle (CI) des Systems, den Schritt des Empfangens, von den durch die Steuerschnittstelle ausgelösten Komponenten, von Ereignissen (EV) in Bezug auf den Zustand der Komponenten;
- für jede Steuerschnittstelle (CI) des Systems, den Schritt des Übertragens der empfangenen Ereignisse (EV) an die anfängliche Steuerschnittstelle (CI1);
- den Schritt des Empfangens der Ereignisse (EV) durch die anfängliche Steuerschnittstelle (CI1); und
- den Schritt des Übertragens der Ereignisse (EV) durch die anfängliche Steuerschnittstelle (CI1) an den Benutzer (USR).

11. Verfahren nach Anspruch 9 oder Anspruch 10, umfassend:
- für jede Steuerschnittstelle (CI) des Systems (SYS), den Schritt des Überprüfens des Zustands der auf ihrem Cloud-Anbieter (CP) ausgeführten Komponenten;
- für jede Steuerschnittstelle (CI) des Systems (SYS), den Schritt des Vergleichens des Zustands einer Komponente mit den Attributen der Komponenten;
- für jede Steuerschnittstelle (CI) des Systems (SYS), wenn die Attribute nicht eingehalten werden, den Schritt des Übertragens einer Warnung an die anfängliche Steuerschnittstelle (CI1);
- einen Schritt des Empfangens der Warnungen durch die anfängliche Steuerschnittstelle (CI1);
- einen Schritt des Übertragens der Warnungen durch die anfängliche Steuerschnittstelle (CI1) an den Benutzer (USR).

12. Verfahren nach Anspruch 11, umfassend, beim Empfangen einer Warnung in Bezug auf eine oder mehrere Komponenten, den Schritt des erneuten Auslösens der Anwendung durch die anfängliche Steuerschnittstelle (CI1).

13. Computerprogramm, umfassend Anweisungen, die, wenn das Programm durch einen Computer ausgeführt wird, den Computer veranlassen, die Schritte des Verfahrens nach Anspruch 9 bis 12 durchzuführen.

14. Computerlesbarer Datenträger, auf dem das Computerprogramm nach Anspruch 13 gespeichert ist.

## Revendications

1. Interface de commande (CI1) pour le déploiement d'une application, ladite interface de commande (CI1) s'exécutant sur un fournisseur de nuage (CP) spécifique, ladite interface de commande (CI1), appelée interface de commande initiale, étant connectée directement ou indirectement au travers d'une ou plusieurs interfaces de commande intermédiaires à une pluralité d'autres interfaces de commande (Cl) s'exécutant sur une pluralité de fournisseurs de nuage (CP), ladite interface de commande initiale (CI1) formant avec ladite pluralité d'autres interfaces de commande (Cl) un réseau, appelé interface maillée, ladite interface de commande initiale (Cl) étant en outre connectée à une base de données de fournisseurs de nuage (CPD) stockant une description de chaque fournisseur de nuage (CP) de la pluralité de fournisseurs de nuage (CPD), ladite interface de commande initiale (CI1) étant choisie par un utilisateur, l'interface de commande initiale (CI1) comprenant :
- un pilote de nuage (DI) spécifique au fournisseur de nuage (CP) sur lequel l'interface de commande (Cl1) s'exécute, ledit pilote de nuage (DI) permettant à l'interface de commande (Cl) d'ordonner au fournisseur de nuage (CP) de déployer un ou plusieurs composants d'une application ;
- des moyens pour recevoir et lire, depuis ledit utilisateur (USR), un fichier d'attributs décrivant une application à déployer ;
- des moyens pour sélectionner, pour chaque composant de l'application, sur la base des descriptions fournies par la base de données de fournisseurs de nuage (CPD) et le fichier d'attributs, un fournisseur de nuage (CP) approprié pour le déploiement dudit composant ;
- pour chaque fournisseur de nuage (CP) sélectionné, des moyens pour envoyer à l'interface de commande (Cl) correspondante le composant à déployer, ladite interface de commande correspondante comprenant un pilote de nuage (DI) spécifique au fournisseur de nuage (CP) sur lequel l'interface de commande correspondante s'exécute, ladite interface de commande correspondante étant configurée pour, lors de la réception du composant à déployer en provenance de l'interface de commande initiale (CI1) de la pluralité d'interfaces de commande (Cl), déployer ledit composant en utilisant le pilote de nuage (DI).

2. Interface de commande (Cl1) selon la revendication 1 dans laquelle l'interface de commande (CI1) comprend en outre :
- des moyens pour recevoir des événements du composant déployé (EV) relatifs à l'état dudit composant ;
- des moyens pour transmettre les événements reçus (EV) à une ou plusieurs interfaces de commande (Cl) de la pluralité d'interfaces de commande (Cl) ;
- des moyens pour recevoir des événements en provenance d'autres interfaces de commande (Cl) de la pluralité d'interfaces de commande (Cl) ;
- des moyens pour transmettre les événements reçus (EV) à l'utilisateur (USR).

3. Interface de commande (Cl1) selon la revendication 1 ou la revendication 2, dans laquelle l'interface de commande (Cl) comprend en outre :
- des moyens pour vérifier l'état des composants s'exécutant sur son fournisseur de nuage (CP) ;
- des moyens pour comparer l'état d'un composant aux attributs desdits composants ;
- lorsque les attributs ne sont pas respectés, des moyens pour transmettre une alerte à l'utilisateur (USR) et/ou à une ou plusieurs interfaces de commande (Cl) de la pluralité d'interfaces de commande (Cl) ;
- des moyens pour recevoir des alertes d'autres interfaces de commande (Cl) de la pluralité d'interfaces de commande (Cl).

4. Interface de commande selon la revendication 3 dans laquelle l'interface de commande comprend, lorsqu'une alerte est émise pour un composant donné, des moyens pour redéployer l'application.

5. Système informatique (SYS) comprenant une pluralité d'interfaces de commande (Cl), comprenant une interface de commande (CI1) initiale selon l'une des revendications 1 à 4 et une base de données de fournisseurs de nuage (CPD) contenant des descriptions d'une pluralité de fournisseurs de nuage (CP) sur lesquels les interfaces de commande (Cl) de la pluralité d'interfaces de commande (Cl) s'exécutent, l'interface de commande initiale et les autres interfaces de commande (Cl) de la pluralité d'interfaces de commande étant connectées à la base de données de fournisseurs de nuage (CPD) et entre elles directement ou indirectement au travers d'une ou plusieurs interfaces de commande intermédiaires pour former un réseau, appelé interface maillée, le système étant configuré pour :
- en utilisant ladite interface de commande initiale (Cl1) de la pluralité d'interfaces de commande (Cl), lire un fichier fourni par un utilisateur (USR) et contenant les attributs d'une application à déployer ;
- pour chaque composant de l'application, en utilisant l'interface de commande initiale (CI1), déterminer, sur la base des descriptions fournies par la base de données de fournisseurs de nuage (CPD) et des attributs de l'application, les solutions de déploiement possibles offertes par la pluralité de fournisseurs de nuage (CP) ;
- pour chaque fournisseur de nuage (CP) sélectionné, en utilisant l'interface de commande initiale (CI1), envoyer le composant à déployer aux interfaces de commande correspondantes (Cl), chacune desdites interfaces de commande correspondantes (Cl) étant configurée pour recevoir le composant à déployer, en utilisant le pilote de nuage (DI) de ladite interface de commande (Cl) et déployer ledit composant sur le fournisseur de nuage correspondant (CP).

6. Système (SYS) selon la revendication 5 dans lequel, chaque interface de commande (Cl) du système est configurée pour :
- recevoir, en provenance des composants qu'ils ont déployés, des événements (EV) relatifs à l'état desdits composants ; et
- transmettre les événements reçus (EV) à l'interface de commande initiale (CI1) ;
et l'interface de commande initiale (CI1) est configurée pour :
- recevoir lesdits événements (EV) ; et
- transmettre lesdits événements (EV) à l'utilisateur (USR).

7. Système (SYS) selon la revendication 5 ou la revendication 6, dans lequel chaque interface de commande (Cl) du système (SYS) est configurée pour :
- vérifier l'état des composants s'exécutant sur son fournisseur de nuage (CP) ;
- comparer l'état des composants aux attributs desdits composants ; et
- lorsque les attributs ne sont pas respectés, transmet une alerte à l'interface de commande initiale (CI1) ;
et l'interface de commande initiale (CI1) est configurée pour :
- recevoir lesdites alertes ;
- transmettre lesdites alertes à l'utilisateur (USR).

8. Système selon la revendication 7 dans lequel l'interface de commande initiale est configurée pour, lors de la réception d'une alerte concernant un ou plusieurs composants, redéployer l'application.

9. Procédé de déploiement basé sur des attributs (100) utilisant un système informatique (SYS) selon la revendication 5, le procédé comprenant :
- En utilisant une interface de commande (CI1) de la pluralité d'interfaces de commande (Cl), appelée interface de commande initiale (CI1), l'étape (E1) de lecture d'un fichier fourni par un utilisateur (USR) et contenant les attributs d'une application à déployer ;
- pour chaque composant de l'application, en utilisant l'interface de commande initiale (CI1), l'étape (E2) de détermination, sur la base des descriptions fournies par la base de données de fournisseurs de nuage (CPD) et des attributs de l'application, des solutions de déploiement possibles offertes par la pluralité de fournisseurs de nuage (CP) ;
- pour chaque fournisseur de nuage sélectionné (CP), en utilisant l'interface de commande initiale (CI1), l'étape (E3) d'envoi des composants à déployer aux interfaces de commande correspondantes (Cl) ;
- pour chaque interface de commande (Cl) recevant un composant à déployer, en utilisant le pilote de nuage (DI) de ladite interface de commande (Cl), l'étape (E4) de déploiement dudit composant sur le fournisseur de nuage correspondant (CP).

10. Procédé selon la revendication 9 comprenant en outre :
- pour chaque interface de commande (Cl) du système, l'étape de réception, en provenance des composants déployés par ladite interface de commande, d'événements (EV) liés à l'état desdits composants ;
- pour chaque interface de commande (Cl) du système, l'étape de transmission des événements reçus (EV) à l'interface de commande initiale (CI1) ;
- l'étape de réception, par l'interface de commande initiale (Cl1), desdits événements (EV) ; et
- l'étape de transmission, par l'interface de commande initiale (Cl1), desdits événements (EV) à l'utilisateur (USR).

11. Procédé selon la revendication 9 ou la revendication 10 comprenant :
- pour chaque interface de commande (Cl) du système (SYS), l'étape de vérification de l'état des composants s'exécutant sur son fournisseur de nuage (CP) ;
- pour chaque interface de commande (Cl) du système (SYS), l'étape de comparaison de l'état d'un composant aux attributs desdits composants ;
- pour chaque interface de commande (Cl) du système (SYS), lorsque les attributs ne sont pas respectés, l'étape de transmission d'une alerte à l'interface de commande initiale (CI1) ;
- une étape de réception, par l'interface de commande initiale (CI1), desdites alertes ;
- une étape de transmission, par l'interface de commande initiale (CI1), desdites alertes à l'utilisateur (USR).

12. Procédé selon la revendication 11 comprenant l'étape consistant, lors de la réception d'une alerte concernant un ou plusieurs composants, à redéployer, par l'interface de commande initiale (CI1), l'application.

13. Programme informatique comprenant des instructions qui, lorsque le programme est exécuté par un ordinateur, amènent l'ordinateur à exécuter les étapes du procédé selon l'une quelconque des revendications 9 à 12.

14. Support de données lisible par un ordinateur sur lequel est stocké le programme d'ordinateur de la revendication 13.
